# EUROPÄISCHE PATENTSCHRIFT

(11) **EP 2 616 206 B1**
(45) Veröffentlichungstag und Bekanntmachung des Hinweises auf die Patenterteilung: **03.06.2020**
(21) Anmeldenummer: 11755336.2
(22) Anmeldetag: 12.09.2011
(51) Int. Cl.: B23C 5/22, B23C 5/10

(54) **WERKZEUG ZUR SPANENDEN BEARBEITUNG EINES WERKSTÜCKS**
CUTTING TOOL FOR MACHINING OF A WORKPIECE
OUTIL DE COUPE POUR USINAGE D'UNE PIÈCE

(30) Priorität: 13.09.2010 DE 102010046132
(43) Veröffentlichungstag der Anmeldung: 24.07.2013
(73) Patentinhaber: Hartmetall-Werkzeugfabrik Paul Horn GmbH, 72072 Tübingen (DE)
(72) Erfinder: VOEGE, Ruediger, 72116 Mössingen (DE)
(74) Vertreter: Witte, Weller & Partner Patentanwälte mbB
(86) Internationale Anmeldenummer: PCT/EP2011/065722
(87) Internationale Veröffentlichungsnummer: WO 2012/034964

(56) Entgegenhaltungen:
- US-A- 3 125 799
- US-A- 5 967 706
- US-A1- 2006 002 780

## Beschreibung

Die Erfindung betrifft ein Werkzeug zur spanenden Bearbeitung eines Werkstücks, insbesondere ein Fräswerkzeug.

Werkzeuge zum Spanen oder Zerspanen von Werkstücken finden weitreichende Anwendung bei der Bearbeitung vielerlei Werkstoffe. Ein Spanen, insbesondere ein Spanen mit geometrisch bestimmter Schneide, bspw. Drehen, Bohren, Senken, Fräsen, Hobeln, Stoßen oder dergleichen, ermöglicht einen definierten Materialabtrag und eignet sich somit insbesondere zur automatisierten Bearbeitung von Werkstoffen.

Spanwerkzeuge weisen häufig Schneiden auf, die aus harten Werkstoffen bestehen oder mit diesen versehene Beschichtungen aufweisen. Dabei kann es sich etwa um Werkzeugstähle, Hartmetalle, Sinterwerkstoffe, Schneidkeramiken, Korund- oder Diamantwerkstoffe handeln.

Um bei einem Verschleiß der Schneide nicht das komplette Werkzeug wechseln zu müssen, sind im Regelfall austauschbare Schneidplatten vorgesehen. Diese können etwa mittelbar an einer Aufnahme an einem Schaft des Werkzeugs befestigt sein. Die Befestigung kann dabei mittelbar, etwa über Klemmverbindungen oder aber unmittelbar, etwa durch direktes Verschrauben oder Verpressen, erfolgen.

Fräswerkzeuge mit austauschbaren Schneidplatten sind beispielsweise aus der US 3,125,799 A, der US 5,967,706 A sowie aus der US 2006/0002780 A1 bekannt. Ein Werkzeug gemäß dem Oberbegriff des Anspruchs 1 ist aus US 3 125 799 A bekannt.

Es hat sich gezeigt, dass notwendige Elemente zur Befestigung oder Sicherung und zur Ausrichtung der Schneiden am Werkzeug Randbedingungen mit sich bringen können, die konstruktive Maßnahmen erforderlich machen, welche Auswirkungen auf die Leistungsfähigkeit und Service- und Reparatureignung der Werkzeuge haben können.

Vor diesem Hintergrund liegt der Erfindung die Aufgabe zugrunde, ein Werkzeug zur spanenden Bearbeitung eines Werkstücks, insbesondere ein Fräswerkzeug, anzugeben, das möglichst auch bei kleinen Abmessungen einen einfachen, schnellen Wechsel der Schneidplatten erlaubt und dabei eine hohe Festigkeit und Genauigkeit gewährleisten kann.

Diese Aufgabe wird erfindungsgemäß gelöst durch ein Werkzeug zur spanenden Bearbeitung eines Werkstücks gemäß Anspruch 1, insbesondere ein Fräswerkzeug, mit einem Schaft, der um eine Längsachse rotatorisch antreibbar und an einer Werkzeugaufnahme festlegbar ist, mit einer Aufnahme, einer Trägerplatte, die eine Schneide mit zumindest einer Schneidkante aufweist, und mit zumindest einem mit einem Gewinde versehenen Befestigungselement, wobei die Trägerplatte mit zumindest einem Innengewinde versehen ist und mittels des zumindest einen Befestigungselements derart an der Aufnahme festlegbar ist, dass die Schneide zentriert, also in Bezug auf die Längsachse ausgerichtet ist, wobei die Trägerplatte aus Hartmetall ist und die Schneide aus kubisch kristallinem Bornitrid (CBN) oder einem Diamantwerkstoff ist, und wobei die Schneide stoffschlüssig an der Trägerplatte festgelegt ist.

Die Aufgabe der Erfindung wird auf diese Weise vollkommen gelöst.

Erfindungsgemäß wird nämlich die Trägerplatte nur in einem möglichst geringen Umfang geschwächt, da die Verschraubung gewissermaßen "von hinten" erfolgt und in der Trägerplatte kein Bauraum, also keine zusätzliche Ausnehmung, für einen Kopf des Befestigungselements vorgehalten werden muss.

Dies ist insbesondere dann von Vorteil, wenn das Werkzeug nur einen relativ kleinen Durchmesser aufweist und die Trägerplatte mit der Schneide im Verhältnis dazu relativ groß ausfällt. Derartige Bauraumverhältnisse erschweren eine mittelbare Befestigung, etwa über Klemmbacken. Bei einer unmittelbaren Befestigung, bspw. einem axialen Verschrauben durch die Trägerplatte in Richtung auf die Längsachse, verbleibt bei kleinen Werkzeugen nicht genügend Bauraum, um etwa einen Schraubenkopf mit einem Antrieb unterzubringen, der mit üblichen Schraubwerkzeugen betätigt werden kann.

In diesem Zusammenhang schlägt die WO 2009/077 060 A1 bei einem Drehwerkzeug vor, eine Querbohrung in eine Schneidplatte einzubringen und darin entweder einen Gewindeeinsatz oder eine Schraube aufzunehmen, um die Schneidplatte mit einer korrespondierenden Schraube oder einem korrespondierenden Gewindeeinsatz am Werkzeugkörper zu verschrauben. Dabei wird vor allem darauf abgestellt, einen möglichst einfachen Wechsel der Schneidplatte zu erlauben, der je nach Zugänglichkeit von der Vorderseite oder der Rückseite der Schneidplatte erfolgen können soll.

Die Lösung der WO 2009/077 060 A1 kann jedoch nicht auf Fräswerkzeuge übertragen werden, da bei diesen ein seitliches Hervorstehen von Befestigungselementen, etwa eines Schraubenkopfes oder einer Gewindehülse, über dem Schaft hinaus dem Betrieb des rotierenden Werkzeugs unmöglich machen würde. Demnach müssten folglich genügend große Senkbohrungen in die Trägerplatte eingebracht werden, um die Schraube mit dem konischen Kopfansatz oder den Gewindeeinsatz mit dem konischen Auslauf gemäß der WO 2009/077 060 A1 versenkt montieren zu können. Damit würde jedoch eine übermäßige Schwächung der Trägerplatte einhergehen, die die Bruchanfälligkeit der Trägerplatte erhöht.

Daneben bestehen bei rotatorisch angetriebenen Werkzeugen zur spanenden Bearbeitung, insbesondere bei Fräswerkzeugen, erhöhte Anforderungen an die Ausrichtung der Trägerplatte mit der Schneide in Bezug auf die Längsachse. Die zumindest eine Schneidkante beschreibt beim Umlauf um die Längsachse einen Schneidkreis, dem der Bearbeitungsdurchmesser zugrunde liegt. Bereits geringe Abweichungen der Ist-Lage der Schneide von der Soll-Lage bezogen auf die Längsachse, können zu einer deutlich verringerten Genauigkeit der Bearbeitung führen.

Eine radiale Abweichung wirkt sich mit dem Faktor 2 auf den Durchmesser des Schneidkreises aus. Da die Zuordnung der Trägerplatte zur Aufnahme des Schaftes im Regelfall auch über Passflächen in Form von Ebenen erfolgt, kann darüber hinaus etwa bei einem Ebenenversatz eine tangentiale Verlagerung der Schneidkante gegenüber dem Soll-Durchmesser des Schneidkreises auftreten.

Somit muss die Befestigung der Trägerplatte bei einem Fräswerkzeug neben der Lagesicherung auch die Ausrichtung der Trägerplatte und damit letztlich die Ausrichtung der Schneide gewährleisten.

Demnach ist die WO 2009/077 060 A1 nicht geeignet, den Anmeldungsgegenstand nahezulegen.

Gemäß einer bevorzugten Ausgestaltung der Erfindung weist der Schaft einen Durchmesser von maximal 12 mm, vorzugsweise maximal 10 mm, weiter bevorzugt maximal 7 mm auf.

Gerade bei verhältnismäßig dünnen und langen Schäften scheiden übliche Ansätze zur Befestigung und Ausrichtung wechselbarer Trägerplatten aus. Um eine möglichst hohe Abtragsleistung bewirken zu können, müssen hohe Schnittgeschwindigkeiten gefahren werden, die jedoch mit einer erhöhten Belastung der Schneide und der Trägerplatte einhergehen. Um diese Lasten über die Aufnahme und den Schaft übertragen zu können, muss das Befestigungselement entsprechend dimensioniert sein. Bei einem Befestigungselement, das zum Wechseln der Trägerplatte mit der Schneide grundsätzlich lösbar gestaltet ist, muss jedoch ein Antrieb vorgesehen sein, der etwa bei einer Schraube im Schraubenkopf angeordnet ist. Da jedoch der Schraubenkopf nicht seitlich über den Schaft des Werkzeugs herausstehen darf, muss die entsprechende Ausnehmung vorgehalten werden, um diesen versenken zu können. Daneben muss jedoch der Antrieb ein gewisses Moment übertragen können, damit der Bediener beim Wechsel der Trägerplatte mit dem Schraubwerkzeug nicht einfach am Antrieb durchrutscht. Somit sind einerseits möglichst geringe Kopfabmessungen gewünscht, andererseits Mindestabmessungen gefordert, die ein Lösen des Befestigungselements erlauben. Eine homogene Ausgestaltung sorgt bei der erfindungsgemäßen Ausführung ferner für einen Wuchtausgleich.

Beispielsweise kann der Schaftdurchmesser etwa 6 mm betragen, wobei das Befestigungsmittel einen Kopfdurchmesser von ungefähr 4 mm und ein Gewindedurchmesser von bspw. M 2,5 aufweist. Die hierfür erforderliche Senkbohrung würde bei einer Befestigung der Trägerplatte von vorne her zu einer Schwächung führen, die die Bruchgefahr deutlich erhöhen würde.

Gemäß einer weiteren Ausgestaltung der Erfindung weist der Schneidkreis einen Durchmesser von maximal 15 mm, vorzugsweise maximal 13 mm, weiter bevorzugt maximal 10 mm auf.

Somit weist der Schneidkreis gegenüber dem Schaftdurchmesser nur einen sehr geringen Überstand auf. Auf diese Weise kann bei gegebenem Bearbeitungsdurchmesser eine maximale Schaftfestigkeit bewirkt werden, die Schaftlängen erlaubt, die ein tiefes Eintauchen des Werkzeugs in ein Werkstück ermöglichen.

Es sei angemerkt, dass der Schneidkreisdurchmesser beim vorgenannten Beispiel 7 mm beträgt, also nur einen 1 mm über dem Durchmesser des Schaftes liegt. Somit wird deutlich, dass die für die Befestigung der Trägerplatte erforderlichen Komponenten innerhalb dieses beengten Bauraums angeordnet sein können.

Gemäß einer Weiterbildung der Erfindung ist die Aufnahme mit einer Rückenfläche und einer Nut versehen, wobei die Nut in Richtung eines Nutgrundes eine Verjüngung aufweist, wobei die Rückenfläche von zumindest einer Ausnehmung durchgriffen ist, und wobei die Rückenfläche und zumindest eine Seitenfläche der Nut einen Innenwinkel einschließen, der mit einem Außenwinkel der Trägerplatte korrespondiert und vorzugsweise 90° beträgt.

Durch diese Maßnahme kann eine hinreichende geometrische Ausrichtung der Trägerplatte vor der Befestigung mit dem Befestigungselement erfolgen. Die Nut kann dabei mit entsprechenden Gegenflächen der Trägerplatte zusammenwirken und die axiale Lage der Trägerplatte auf dem Schaft bestimmen.

Daneben kann die Nut die radiale Lage der Schneide mit der zumindest einen Schneidkante in Bezug auf die Längsachse vorgeben.

Zusätzlich kann die Rückenfläche eine Ebene beschreiben, die parallel zur Längsachse angeordnet ist oder diese schneidet, und an der eine Gegenfläche der Trägerplatte zur Anlage gelangen kann.

Bei gegebener Axiallage und Radiallage der Schneide bestimmt die Rückenfläche, ob die zumindest eine Schneidkante direkt auf dem Schneidkreis oder aber, bei einer Fehlstellung, leicht vom Kreisumfang tangential versetzt ist.

Somit kann trotz leichter Zugänglichkeit eine Trägerplatte einfach eingeschoben werden und eine hohe Lagegenauigkeit bewirkt werden.

Daneben können die großflächigen Anlagen hohe Momente bzw. Kräfte aufnehmen und damit das Befestigungselement als solches entlasten. Hieraus ergibt sich unmittelbar, dass das Befestigung entsprechend klein dimensioniert sein kann und somit nur eine geringe Schwächung der Trägerplatte erfolgen muss, etwa um das Innengewinde vorzusehen.

Gemäß einer Weiterbildung der Erfindung weist die Trägerplatte zumindest einen Gewindeeinsatz auf, der mit dem Innengewinde versehen ist und senkrecht zur Längsachse ausgerichtet ist.

Auch damit kann die Festigkeit der Trägerplatte erhöht und insbesondere die Bruchgefahr weiter verringert werden.

Üblicherweise bestehen Trägerplatten aus besonders harten und damit auch relativ spröden Werkstoffen. Das Einbringen eines Gewindes in solche Werkstoffe kann einen hohen Fertigungsaufwand erforderlich machen, oder aber abhängig vom Härtegrad und der Größe des Gewindes technologisch schlichtweg nicht möglich sein. Es ist daher von Vorteil, in der Trägerplatte lediglich eine Bohrung, etwa eine Passbohrung, vorzusehen und darin einen Gewindeeinsatz aufzunehmen.

Der Gewindeeinsatz kann aus einem Werkstoff bestehen, der zäher als der Werkstoff der Trägerplatte ist. Somit sinkt auch die unmittelbare Bruchgefahr am Gewinde.

Gemäß einem weiteren Aspekt der Erfindung weist das zumindest eine Befestigungselement einen Kopf mit einem Antrieb auf, wobei das zumindest eine Befestigungselement von einer der Rückenfläche der Aufnahme abgewandten Seite zuführbar ist, wobei der Kopf in der zumindest einen Ausnehmung versenkbar ist, und wobei das zumindest eine Befestigungselement und die zumindest eine Ausnehmung vorzugsweise einen Konus aufweisen.

Auf diese Weise erfolgt die "Schwächung" in der Aufnahme am Schaft. Der dort verwendete Werkstoff kann jedoch bspw. zwar eine geringere Härte, aber dafür eine höhere Zähigkeit aufweisen, so dass auch bei einer Ausnehmung in Form einer Senkbohrung mit einem Konus keine hohe Bruchgefahr besteht.

Gleichsam kann der Kopf des Befestigungselements vollständig oder nahezu vollständig in der Aufnahme versenkt werden, jedenfalls so, dass gewährleistet ist, dass der Kopf nicht über den Schneidkreis des Werkzeugs hinausragt.

Eine konische Ausrichtung des Befestigungselements an der Aufnahme ergibt eine zusätzliche Möglichkeit zur Lagefixierung.

Gemäß einer weiteren Ausgestaltung der Erfindung ist die Trägerplatte derart in Bezug auf die Längsachse festlegbar, dass die zumindest eine Schneidkante zumindest abschnittsweise in einer Sollebene verläuft, die die Längsachse schneidet und vorzugsweise parallel zur Rückenfläche verläuft.

Auch damit kann die gewünschte Ausrichtung gewährleistet werden. Es ist dabei insbesondere keine Maßabweichung durch einen Winkelversatz zwischen der Schneidkante und der Längsachse zu befürchten.

Gemäß einer weiteren Ausgestaltung der Erfindung weist die Schneidkante zumindest einen Referenzpunkt auf, der beim Umlauf einen Soll-Schneidkreis des Werkzeugs beschreibt.

Der Referenzpunkt kann etwa ein Eckpunkt oder aber ein besonders exponierter Punkt der Schneidkante sein. Dieser Punkt beschreibt beim Umlauf um die Längsachse zwangsläufig einen Kreis, bei vorheriger Ausrichtung der Trägerplatte ist sichergestellt, dass dieser Kreis dem Soll-Schneidkreis des Werkzeugs entspricht.

Gemäß einer Weiterbildung der Erfindung weist die Schneide zumindest eine zumindest abschnittsweise gerade Schneidkante auf, die parallel zur Längsachse verläuft.

Auf diese Weise kann sich eine Eingriffslinie des Werkzeugs im Werkstück ergeben, die einen hohen Abtrag erlaubt und die Bearbeitung gerader Wände ermöglicht.

Gemäß einem weiteren Aspekt der Erfindung weist die Schneide zumindest eine zumindest abschnittsweise bogenförmige, insbesondere kreisbogenförmige Schneidkante auf.

Somit können etwa kugelförmige, ellipsenförmige Geometrien oder aber Ausrundungen in Werkstücke eingebracht werden.

Gemäß einer Weiterbildung der Erfindung weist das Werkzeug ein Durchmesser-Längen-Verhältnis von mindestens 1:8, vorzugsweise mindestens 1:10, weiter bevorzugt von mindestens 1:12 auf.

Damit ergibt sich die besondere Eignung des Werkzeugs für Bearbeitungsschritte, bei denen eine erschwerte Zugängigkeit des Werkstücks gegeben ist und bspw. ein tiefes Eintauchen erforderlich ist.

Gemäß einer weiteren Ausgestaltung der Erfindung ist die Nut als V-Nut ausgebildet und weist einen Öffnungswinkel auf, der maximal 100°, vorzugsweise ungefähr 90°, weiter bevorzugt maximal 90° beträgt, wobei vorzugsweise im Nutgrund ein Einstich vorgesehen ist.

Eine V-Nut erlaubt eine leichte Zuführung der Trägerplatte. Die Trägerplatte findet gewissermaßen "selbstständig" ihre Soll-Ausrichtung. Die Trägerplatte weist mit der V-Nut korrespondierende Flächen auf.

Daneben erlaubt die Gestaltung der Nut eine Aufnahme sowohl axialer Kräfte als auch zumindest teilweise radialer Kräfte. Damit kann eine Entlastung des Befestigungselements einhergehen und sich in dessen Dimensionierung niederschlagen.

Gemäß einem weiteren Aspekt der Erfindung ist die zumindest eine Ausnehmung an der Rückenfläche als Senkbohrung ausgebildet, senkrecht zur Längsachse ausgerichtet und schneidet die Längsachse.

Auf diese Weise kann die Zuordnung der Trägerplatte über Elemente erfolgen, die einfach herstellbar sind und deren Lage und Ausrichtung mit geringem Aufwand überprüfbar ist.

Daneben ist es bevorzugt, wenn das zumindest eine Befestigungselement einen Kopf mit einem Antrieb aufweist, der ein versenktes Formschlusselement zur Drehmitnahme aufweist, vorzugsweise einen Innensechskant oder einen Innensechsrund.

Somit kann die Trägerplatte mit der Schneide besonders einfach mit handelsüblichem Werkzeug gewechselt werden. Dabei ist es möglich, trotz der kleinen Abmessungen den Kopf am Befestigungselement in einer Größe auszuführen, die eine gute Zugänglichkeit und Handhabbarkeit gewährleistet.

Insbesondere wenn das Werkzeug nur von einer Seite zugänglich ist, kann die Trägerplatte von der Rückseite der Aufnahme her durch Lösen des Befestigungselements gelöst werden und gewissermaßen "blind" entnommen werden. Anschließend kann ebenso "blind" eine neue Trägerplatte mit einer frischen Schneide zugeführt werden, die Gestaltung der Aufnahme erlaubt eine einfache Ausrichtung. Das Verschrauben des Befestigungselements mit der Trägerplatte sichert die Trägerplatte und zentriert die Schneide.

Gemäß einer weiteren Ausgestaltung der Erfindung ist der zumindest eine Gewindeeinsatz stoffschlüssig oder kraftschlüssig in der Trägerplatte aufgenommen ist, vorzugsweise verlötet oder verpresst.

Derartige Verbindungsverfahren gewährleisten eine ausreichende Festigkeit. Da die zur Zentrierung der Trägerplatte an der Aufnahme beitragenden Elemente auch dazu ausgebildet sind, Kräfte und Momente aufzunehmen, die auf die Trägerplatte einwirken, wird die Schraubverbindung und damit der Gewindeeinsatz entlastet, was sich in deren Dimensionierung niederschlagen kann.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht eines erfindungsgemäßen Werkzeugs im Bereich der Trägerplatte;
- Fig. 2: eine Ansicht des Werkzeugs gemäß Fig. 1 im explodierten Zustand;
- Fig. 3: eine Seitenansicht des Werkzeugs gemäß Fig. 1 mit einem Schnitt durch die Aufnahme;
- Fig. 4a, 4b, 4c: drei projizierte Ansichten des Werkzeugs gemäß Fig. 1;
- Fig. 5a, 5b: eine Seitenansicht und eine Draufsicht einer Aufnahme und eines Schaftes des Werkzeugs gemäß Fig. 1;
- Fig. 6: eine perspektivische Ansicht des Werkzeugs gemäß Fig. 1 in seiner Gesamtheit unter Auslassung der Trägerplatte;
- Fig. 7a, 7b: zwei perspektivische Ansichten einer Trägerplatte zur Verwendung bei einem erfindungsgemäßen Werkzeug;
- Fig. 7c: eine Ansicht der Trägerplatte gemäß Fig. 7a von der Unterseite her;
- Fig. 7d: eine Schnittansicht der Trägerplatte gemäß Fig. 7a;
- Fig. 8: eine Schnittansicht der Trägerplatte gemäß Fig. 7a mit einem Gewindeeinsatz;
- Fig. 9: eine perspektivische Ansicht einer weiteren Trägerplatte zur Verwendung bei einem erfindungsgemäßen Werkzeug;
- Fig. 10a: eine perspektivische Ansicht der Trägerplatte gemäß Fig. 9 mit einer Schneide; und
- Fig. 10b, 10c: zwei projizierte Ansichten der Trägerplatte gemäß Fig. 10a.

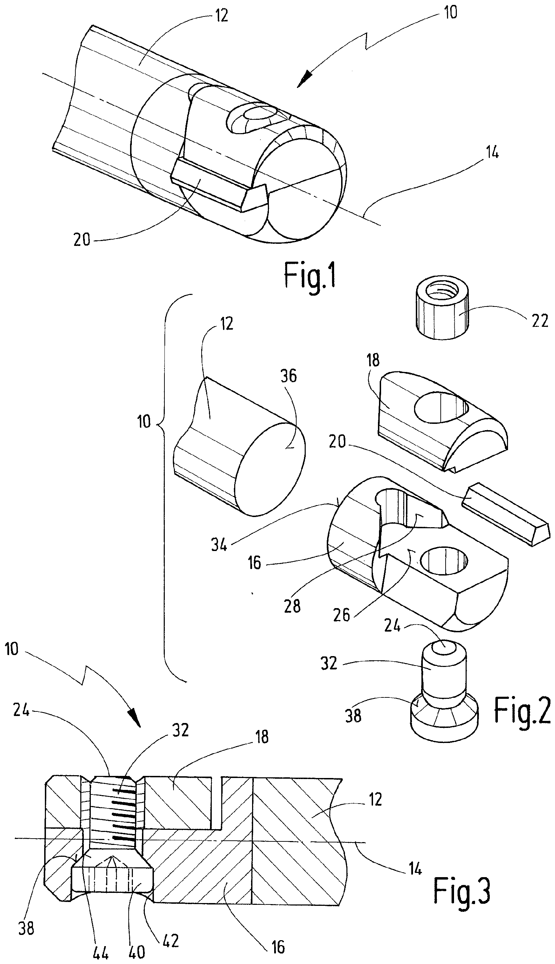

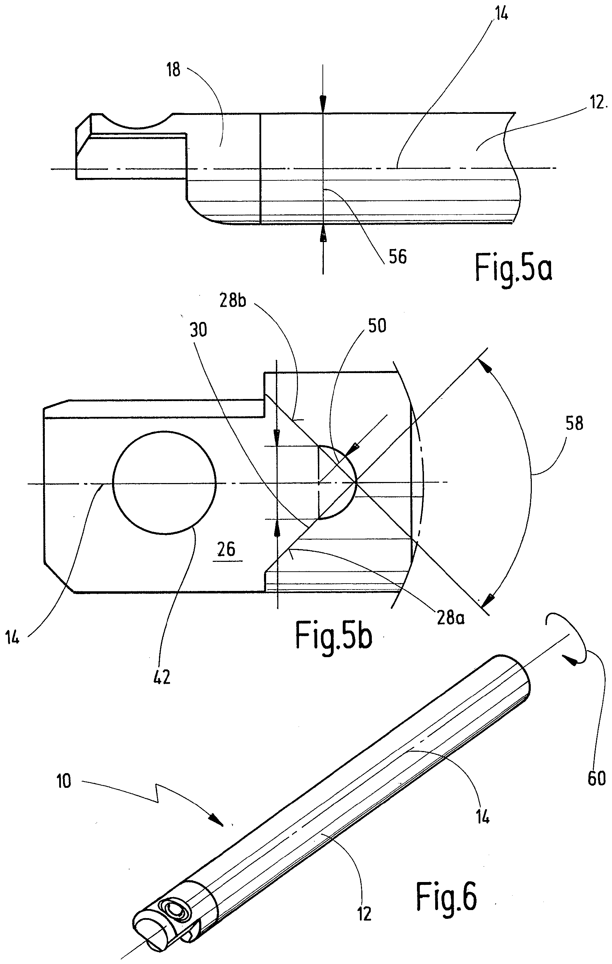

Ein erfindungsgemäßes Werkzeug ist in Fig. 1 dargestellt und insgesamt mit 10 bezeichnet. Das Werkzeug 10 ist in Fig. 1 gebrochen dargestellt, zur Veranschaulichung der Größenverhältnisse vergleiche Fig. 6.

Beim Werkzeug 10 handelt es sich um ein Fräswerkzeug mit einem Schaft 12, der um eine Längsachse 14 rotierbar ist. Bei der Rotation um die Längsachse 14 beschreibt eine Schneide 20 einen Schneidkreis, entlang dem ein Werkstück bei einem Eingriff spanend abgetragen wird.

Anhand der Explosionsdarstellung in Fig. 2 sind Einzelheiten des Werkzeugs 10 ersichtlich. Das Werkzeug 10 weist eine Aufnahme 16 auf, die am Schaft 12 befestigt werden kann oder aber alternativ mit diesem zusammen einstückig ausgeführt werden kann.

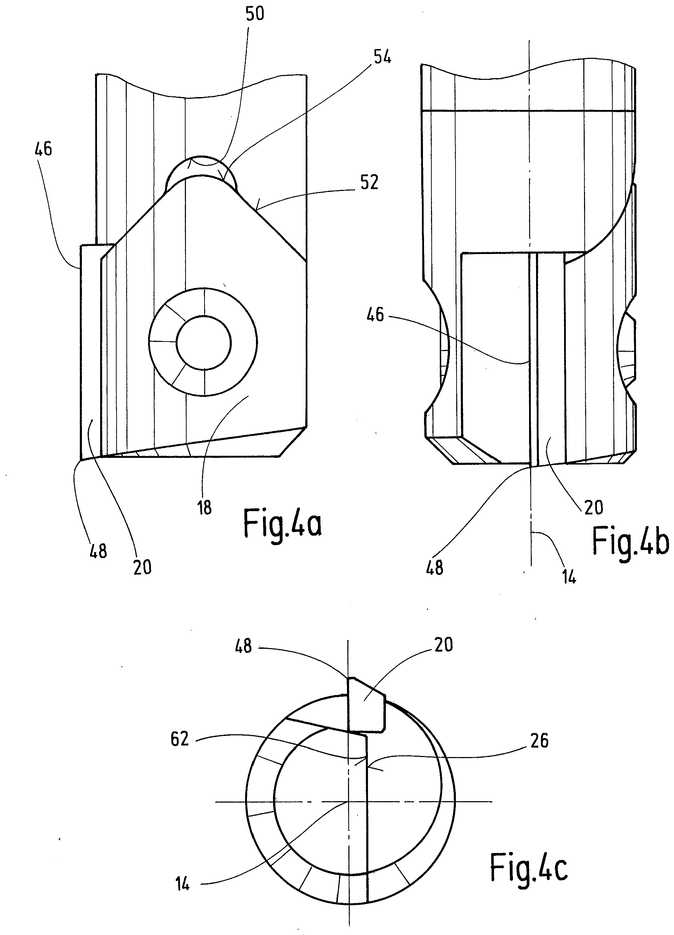

Daneben ist eine Trägerplatte 18 vorgesehen, die der Aufnahme der Schneide 20 dient. In der Trägerplatte 18 ist ein Gewindeeinsatz 22 aufgenommen. Die Trägerplatte 18 mit dem Gewindeeinsatz 22 kann über ein Befestigungselement 24, das dem Gewindeeinsatz 22 von hinten durch die Aufnahme 16 zuführbar ist, an der Aufnahme 16 festgelegt werden. Dabei kommt die Trägerplatte 18 an einer Rückenfläche 26 der Aufnahme 16 zur Anlage. Daneben ist bei der Aufnahme 16 eine Nut 30 vorgesehen, welche Seitenflächen 28 aufweist, die sich in Richtung auf einen Nutgrund verjüngen, vgl. auch Fig. 4a und Fig. 5b.

Gemäß der Darstellung in Fig. 2 kann die Aufnahme 16 über eine Kontaktfläche 34 an einer Kontaktfläche 36 des Schaftes 12 festgelegt werden. Dies kann etwa stoffschlüssig erfolgen, bspw. mittels Löten oder Schweißen.

Durch die Untergliederung des Werkzeugs 10 in verschiedene Komponenten ist es möglich, jede Komponente im Hinblick auf ihren Zweck und ihre Belastungen geeignet auszulegen. So kann etwa der Schaft 12 mit geringem Aufwand aus einem Rundmaterial gefertigt sein und eine hohe Zähigkeit, dabei jedoch eine im Vergleich zu den anderen Komponenten geringere Härte aufweisen. An den Schaft 12 schließt sich die Aufnahme 16 an, die hochgenau gefertigt sein muss, um im Zusammenspiel mit den anderen Komponenten die Ausrichtung der Trägerplatte 18 gewährleisten zu können.

Die Trägerplatte 18 ist aus einem Hartmetall gefertigt. An der Trägerplatte 18 selbst ist die Schneide 20 befestigt, die eine besonders Härte aufweist.

Die Schneide 20 besteht aus CBN (Cubischem Bornitrid) oder einem Diamantwerkstoff, und ist, insbesondere als monokristalliner Diamant ausgebildet. Daneben ist die Schneide 20 mit der Trägerplatte 18 einstückig ausgeführt.

In Fig. 3 ist ein Schnitt durch die Aufnahme 16 und die Trägerplatte 18 dargestellt. Es ist zu erkennen, dass das Befestigungselement 24 in Form einer Schraube, insbesondere einer Spannschraube ausgebildet ist und vollständig in der Aufnahme 16 und der Trägerplatte 18 versenkt ist. Somit steht beim Umlauf des Werkzeugs 10 kein Teil des Befestigungselements 24 nach außen hervor.

Das Befestigungselement 24 ist in einer Ausnehmung 42 in der Aufnahme 16 angeordnet. Die Ausnehmung 42 ist als Senkbohrung bzw. Stufenbohrung ausgeführt. In einem ersten Abschnitt der Ausnehmung 42 ist ein Kopf 40 des Befestigungselements 24 aufgenommen. Daran anschließend weist die Ausnehmung 42 einen Konus 44 auf, in dem ein Konus 38 des Befestigungselements 24 zur Anlage gelangt. Auf diese Weise ergibt sich eine hochgenaue Ausrichtung des Befestigungselements 24 in der Ausnehmung 42.

Der Kopf 40 weist ferner einen nach innen gerichteten Antrieb, etwa einen Torx, einen Innensechskant oder einen Innensechsrund auf.

Anhand der Figuren 4a, 4b und 4c wird die angestrebte Ausrichtung der Schneide 20 in Bezug auf die Längsachse 14 erläutert.

Bei einem Fräswerkzeug wird im Regelfall angestrebt, das Werkzeug zentrisch, also in Bezug auf die Längsachse 14 auszurichten. Vorliegend weist das Werkzeug 10 eine gerade Schneidkante 46 auf, die parallel zur Längsachse 14 verläuft. Diese Ausrichtung ergibt sich über die Ausrichtung der Trägerplatte 18 gegenüber der Aufnahme 16. Hierzu kommen Passflächen 52a, b der Trägerplatte 18 zur Anlage an Seitenflächen 28, vgl. Fig. 2, Fig. 5b, der Nut 30 der Aufnahme 16. Daneben kommt die Rückenfläche 26 der Aufnahme 16 an einer Passfläche 62 der Trägerplatte 18 zur Anlage.

Im Nutgrund der Nut 30 ist ein Einstich 50 vorgesehen, der eine Freisparung für eine Rundung 54 der Trägerplatte 18 aufweist. Somit wird sichergestellt, dass die Ausrichtung der Trägerplatte 18 in der Nut 30 der Aufnahme 16 über die Seitenflächen 28 und die damit korrespondierenden Passflächen 52a, b erfolgt.

In Fig. 4c ist zu erkennen, dass ein Referenzpunkt 48, der einen Endpunkt der Schneidkante 46 der Schneide 20 verkörpert, beim Umlauf um die Längsachse 14 einen Schneidkreis beschreibt, der lediglich ein wenig größer ist als der Durchmesser des Schaftes 12 ist. Somit muss sichergestellt werden, dass keine Komponenten des Werkzeugs 10 wesentlich über den Durchmesser des Schaftes 12 nach außen hervorragen. Gleichwohl müssen die für eine hohe Schnittleistung erforderlichen hohen Kräfte und Momente über den Schaft 12 des Werkzeugs 10 auf die Schneide 20 und schließlich in das Werkstück übertragen werden. Gerade bei Werkzeugen 10 mit einem geringen Durchmesser kann sich dabei ein Auslegungskonflikt ergeben.

Es muss eine gute Zugängigkeit und gleichzeitig ein einfaches Wechseln einer Trägerplatte mit einer verschlissenen oder gebrochenen Schneide ermöglicht sein, gleichzeitig darf die Trägerplatte selbst nicht so weit geschwächt sein, dass deren Bruchgefahr steigt. Darüber hinaus muss sich beim Wechsel der Trägerplatte mit der Schneide ohne großen Aufwand die gewünschte Zentrierung der Schneide ergeben.

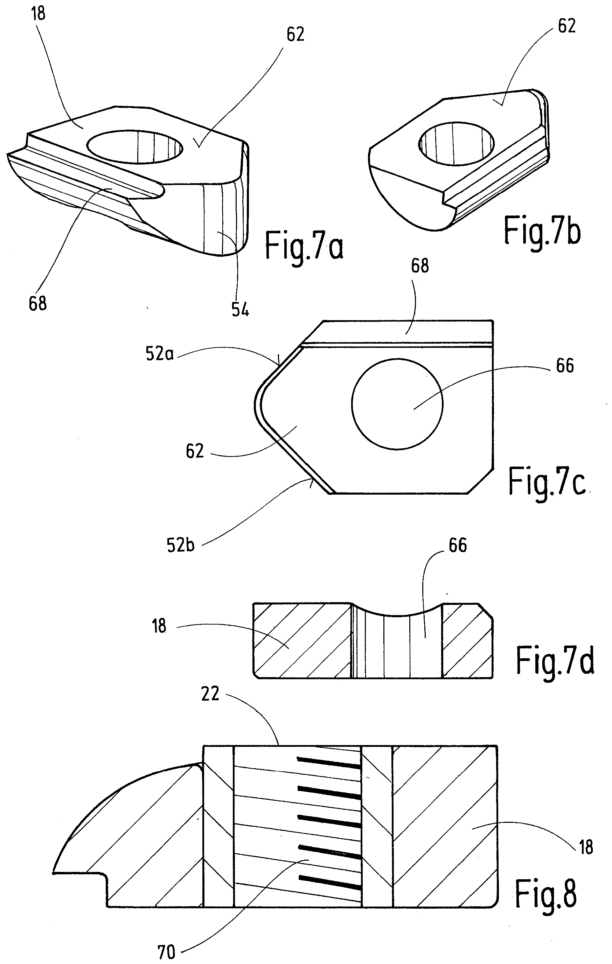

Im Rahmen der Erfindung wird diesem Umstand Rechnung getragen, indem die Verschraubung der Trägerplatte 18 von hinten durch die Aufnahme 16 erfolgt. Somit ist die große Öffnung, die Ausnehmung 42, an der Aufnahme vorgesehen, während die Trägerplatte 18 lediglich ein Innengewinde 70 aufweisen muss, vgl. Fig. 8. Daneben weisen sowohl die Aufnahme 16 als auch die Trägerplatte 18 Formelemente auf, die einerseits die Ausrichtung zueinander gewährleisten und damit die Zentrierung der Schneide 20 bewirken, andererseits auch dazu ausgebildet sind, zumindest einen Teil der bei der Bearbeitung eines Werkstücks übertragenen Kräfte aufzunehmen, so dass diese nicht von der Verschraubung der Trägerplatte 18 an der Aufnahme 16 aufgenommen werden müssen.

In Fig. 5a ist eine Seitenansicht der Trägerplatte 18 und eines Teils des sich daran anschließenden Schaftes 12 dargestellt. Fig. 5b zeigt eine gegenüber Fig. 5a um 90° gedrehte und vergrößerte Darstellung. Vorliegend schließen die Seitenflächen 28a und 28b der Nut 30 einen mit 58 bezeichneten Winkel ein, der 90° beträgt. Darüber hinaus ist jede der Seitenflächen 28a, 28b in einem rechten Winkel zur Rückenfläche 26 angeordnet.

Die Trägerplatte 18 weist eine grundsätzlich ähnliche Kontur auf, so dass sich eine Ausrichtung ohne Weiteres über ein Einschieben der Trägerplatte 18 in die Nut 30 der Aufnahme 16 ergibt.

Fig. 6 verdeutlicht beispielhaft ein Durchmesser-Längen-Verhältnis des Handwerkzeugs 10. Das der Darstellung zugrunde liegende Beispiel weist einen Schaft 12 auf, der mit einem Durchmesser von 6 mm versehen ist und eine Länge von 72 mm aufweist. Insgesamt ergibt sich eine Länge von ungefähr 82 mm, wenn die Aufnahme 16 am Schaft 12 festgelegt ist. Bekannte Ansätze zur Befestigung von Trägerplatten oder Schneidplatten eignen sich nicht für derartig lange und schmale Werkzeuge.

In den Figuren 7a, 7b, 7c und 7d ist eine Trägerplatte 18 dargestellt, an der noch keine Schneide festgelegt ist. Zur Befestigung einer Schneide, etwa der Schneide 20 gemäß Fig. 2, ist eine Schneidenaufnahme 68 vorgesehen, die die gewünschte Ausrichtung der Schneide 20 gewährleistet. Die Schneide 20 ist stoffschlüssig an der Trägerplatte 18 festgelegt.

In Fig. 7d ist die Trägerplatte 18 im Schnitt durch eine Bohrung 66 dargestellt, in die bei der Darstellung in Fig. 8 die Hülse eingesetzt ist, die das Gewinde 70 aufweist.

Grundsätzlich kann das Gewinde 70 auch direkt in der Trägerplatte 18 erzeugt sein, jedoch kann dies insbesondere bei besonders harten und spröden Werkstoffen mit einem sehr hohen Aufwand verbunden sein. Somit kann es sich bei kleinen Abmessungen der Trägerplatte 18 empfehlen, das Gewinde 70 in einem zusätzlichen Bauteil, dem Gewindeeinsatz 22, vorzusehen. Der Gewindeeinsatz 22 kann dabei mit der Trägerplatte 18 verpresst, verlötet, oder in sonstiger geeigneter Weise kraftschlüssig oder formschlüssig aufgenommen sein.

Beim Gewindeeinsatz 22 kann grundsätzlich ein ausreichend zähes Material zur Anwendung kommen, so dass die Bruchgefahr verglichen mit einem etwa direkt in eine Trägerplatte 18 aus einem Hartmetall eingebrachten Gewinde deutlich reduziert werden kann.

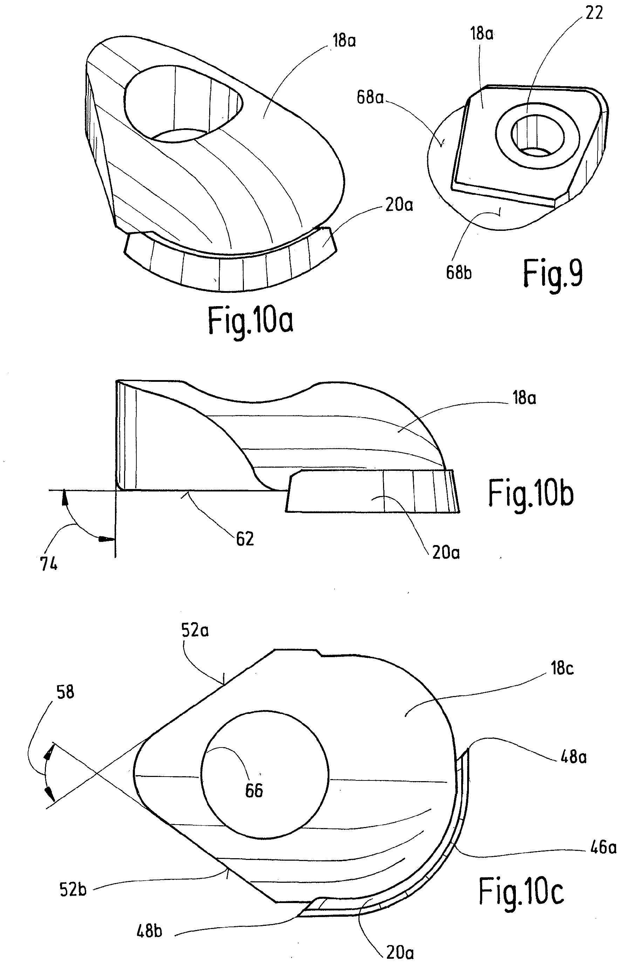

In Fig. 9 ist eine Trägerplatte 18a dargestellt, die grundsätzlich mit einer Schneide mit einer bogenförmigen oder kreisbogenförmigen Schneidkante zur Verwendung kommen kann.

Die Trägerplatte 18a ist in den Figuren 10a, 10b, 10c mit einer mit 20a bezeichneten Schneide versehen, die etwa die Form eines Viertelkreises beschreibt. Mit einem Werkzeug 10 mit einer derartigen Schneide 20a können etwa Rundungen oder dergleichen in Werkstücke eingebracht werden. Die Befestigung der Schneide 20a erfolgt grundsätzlich analog zur Befestigung der Schneide 20 an der Trägerplatte 18.

Jedoch sind in Fig. 9 zwei Schneidenaufnahmen 68a, 68b angedeutet, so dass die Schneide 20a grundsätzlich in zwei zur Längsachse 14 symmetrischen Lagen am Werkzeug 10 angeordnet sein kann. Ebenso ist eine etwa halbkreisförmige Schneide denkbar. Die Ausrichtung der Trägerplatte 18a gegenüber der Aufnahme erfolgt wiederum über Passflächen 52a, 52b, 52c. Beispielhaft weisen die Passflächen 52a, 52b, die dazu ausgebildet sind, mit den Seitenflächen 28 der Nut 30 in Übereinstimmung zu gelangen, einen gemeinsamen Einschlusswinkel 58 auf, der < 90° ist. Demgegenüber schließt die Passfläche 62 mit jeder der Passflächen 52a und 52b einen rechten Winkel ein, angedeutet durch einen mit 74 bezeichneten Pfeil.

Insgesamt wird mit der Erfindung ein Werkzeug bereitgestellt, das auch bei besonders kleinen Abmessungen, insbesondere bei einem kleinen Durchmesser, eine hohe Standfestigkeit der Schneide und der diese tragende Trägerplatte sowie im Verschleißfall eine einfache und schnelle Auswechselbarkeit bei gleichbleibend hoher Genauigkeit gewährleistet.

## Patentansprüche

1. Werkzeug zur spanenden Bearbeitung eines Werkstücks, insbesondere Fräswerkzeug, mit einem Schaft (12), der um eine Längsachse (14) rotatorisch antreibbar und an einer Werkzeugaufnahme festlegbar ist, mit einer Aufnahme (16), einer Trägerplatte (18), die eine Schneide (20) mit zumindest einer Schneidkante (46) aufweist, und mit zumindest einem mit einem Gewinde (32) versehenen Befestigungselement (24), wobei die Trägerplatte (18) mit zumindest einem Innengewinde (70) versehen ist und mittels des zumindest einen Befestigungselements (24) derart an der Aufnahme (16) festlegbar ist, dass die Schneide (20) zentriert, also in Bezug auf die Längsachse (14) ausgerichtet ist,
**dadurch gekennzeichnet, dass** die Trägerplatte (18) aus Hartmetall ist und die Schneide (20) aus kubisch kristallinem Bornitrid (CBN) oder einem Diamantwerkstoff ist, und dass die Schneide (20) stoffschlüssig an der Trägerplatte (18) festgelegt ist.

2. Werkzeug (10) nach Anspruch 1, wobei der Schaft (12) einen Durchmesser (56) von maximal 12 mm, vorzugsweise maximal 10 mm, weiter bevorzugt maximal 7 mm aufweist.

3. Werkzeug (10) nach Anspruch 1 oder 2, wobei der Schneidkreis einen Durchmesser von maximal 15 mm, vorzugsweise maximal 13 mm, weiter bevorzugt maximal 10 mm aufweist.

4. Werkzeug (10) nach einem der vorhergehenden Ansprüche, wobei die Aufnahme (16) mit einer Rückenfläche (26) und einer Nut (30) versehen ist, wobei die Nut (30) in Richtung eines Nutgrundes eine Verjüngung aufweist, wobei die Rückenfläche (26) von zumindest einer Ausnehmung (42) durchgriffen ist, und wobei die Rückenfläche (26) und zumindest eine Seitenfläche (28) der Nut (30) einen Innenwinkel einschließen, der mit einem Außenwinkel der Trägerplatte (18) korrespondiert und vorzugsweise 90° beträgt.

5. Werkzeug (10) nach einem der vorhergehenden Ansprüche, wobei die Trägerplatte (18) zumindest einen Gewindeeinsatz (22) aufweist, der mit dem Innengewinde (70) versehen ist und senkrecht zur Längsachse (14) ausgerichtet ist.

6. Werkzeug (10) nach einem der vorhergehenden Ansprüche, wobei das zumindest eine Befestigungselement (24) einen Kopf (40) mit einem Antrieb aufweist und von einer der Rückenfläche (26) der Aufnahme (16) abgewandten Seite zuführbar ist, wobei der Kopf (40) in der zumindest einen Ausnehmung (42) versenkbar ist, und wobei das zumindest eine Befestigungselement (24) und die zumindest eine Ausnehmung (42) vorzugsweise einen Konus (38, 44) aufweisen.

7. Werkzeug (10) nach einem der vorhergehenden Ansprüche, wobei die Trägerplatte (18) derart in Bezug auf die Längsachse (14) festlegbar ist, dass die zumindest eine Schneidkante (46) zumindest abschnittsweise in einer Sollebene verläuft, die die Längsachse (14) schneidet und vorzugsweise parallel zur Rückenfläche (26) verläuft.

8. Werkzeug (10) nach einem der vorhergehenden Ansprüche, wobei die Schneidkante (46) zumindest einen Referenzpunkt (48) aufweist, der beim Umlauf einen Soll-Schneidkreis des Werkzeugs (10) beschreibt.

9. Werkzeug (10) nach einem der vorhergehenden Ansprüche, wobei die Schneide (20) zumindest eine zumindest abschnittsweise gerade Schneidkante (46) aufweist, die parallel zur Längsachse (14) verläuft.

10. Werkzeug (10) nach einem der vorhergehenden Ansprüche, wobei die Schneide (20) zumindest eine zumindest abschnittsweise bogenförmige, insbesondere kreisbogenförmige Schneidkante (46) aufweist.

11. Werkzeug (10) nach einem der vorhergehenden Ansprüche, wobei das Werkzeug ein Durchmesser-Längen-Verhältnis von mindestens 1:8, vorzugsweise mindestens 1:10, weiter bevorzugt von mindestens 1:12 aufweist.

12. Werkzeug (10) nach einem der vorhergehenden Ansprüche, wobei die Nut (30) als V-Nut ausgebildet ist und einen Öffnungswinkel (58) aufweist, der maximal 100°, vorzugsweise ungefähr 90°, weiter bevorzugt maximal 90° beträgt, und wobei vorzugsweise im Nutgrund ein Einstich (50) vorgesehen ist.

13. Werkzeug (10) nach einem der vorhergehenden Ansprüche, wobei die zumindest eine Ausnehmung (42) in der Rückenfläche (26) als Senkbohrung ausgebildet ist, senkrecht zur Längsachse (14) ausgerichtet ist und die Längsachse (14) schneidet.

14. Werkzeug (10) nach einem der vorhergehenden Ansprüche, wobei das zumindest eine Befestigungselement (24) einen Kopf (40) mit einem Antrieb aufweist, der ein versenktes Formschlusselement zur Drehmitnahme aufweist, vorzugsweise einen Innensechskant oder einen Innensechsrund.

15. Werkzeug (10) nach einem der vorhergehenden Ansprüche, wobei der zumindest eine Gewindeeinsatz (22) stoffschlüssig oder kraftschlüssig in der Trägerplatte (18) aufgenommen ist, vorzugsweise verlötet oder verpresst ist.

## Claims

1. A tool for machining a workpiece, in particular a milling tool, including a shank (12) which is drivable rotatably about a longitudinal axis (14) and is fixable to a tool holding fixture, including a holding fixture (16), a support plate (18) which comprises a cutting element (20) with at least one cutting edge (46), and including at least one fastening element (24) which is provided with a thread (32), wherein the support plate (18) is provided with at least one internal thread (70) and is fixable to the holding fixture (16) by means of the at least one fastening element (24) in such a manner that the cutting element (20) is centered, thus aligned with respect to the longitudinal axis (14).
**characterized in that** the support plate (18) is made of carbide metal and the cutting element (20) is made of cubic boron nitride (CBN) or a diamond material, and **in that** the cutting element (20) is attached to the support plate (18) by means of a material bond.

2. The tool (10) as claimed in claim 1, wherein the shank (12) has a diameter (56) of a maximum of 12 mm, preferably a maximum of 10 mm, further preferably a maximum of 7 mm.

3. The tool (10) as claimed in claim 1 or 2, wherein the cutting circle has a diameter of a maximum of 15 mm, preferably a maximum of 13 mm, further preferably a maximum of 10 mm.

4. The tool (10) as claimed in one of the preceding claims, wherein the holding fixture (16) is provided with a back surface (26) and a groove (30), wherein the groove (30) tapers in the direction of a groove base, wherein at least one recess (42) reaches through the back surface (26), and wherein the back surface (26) and at least one side surface (28) of the groove (30) enclose an internal angle which corresponds to an external angle of the support plate (18) and is preferably 90°.

5. The tool (10) as claimed in one of the preceding claims, wherein the support plate (18) comprises at least one threaded insert (22) which is provided with the internal thread (70) and is oriented perpendicularly to the longitudinal axis (14).

6. The tool (10) as claimed in one of the preceding claims, wherein the at least one fastening element (24) comprises a head (40) with a drive and is feedable in from a side remote from the back surface (26) of the holding fixture (16), wherein the head (40) is recessable in the at least one recess (42), and wherein the at least one fastening element (24) and the at least one recess (42) preferably have a cone (38, 44).

7. The tool (10) as claimed in one of the preceding claims, wherein the support plate (18) is fixable with respect to the longitudinal axis (14) in such a manner that at least sections of the at least one cutting edge (46) run in a desired plane which intersects the longitudinal axis (14) and preferably runs parallel to the back surface (26).

8. The tool (10) as claimed in one of the preceding claims, wherein the cutting edge (46) comprises at least one reference point (48) which, on revolving, describes a desired cutting circle of the tool (10).

9. The tool (10) as claimed in one of the preceding claims, wherein the cutting element (20) comprises at least one cutting edge (46), at least sections of which are rectilinear and which runs parallel to the longitudinal axis (14).

10. The tool (10) as claimed in one of the preceding claims, wherein the cutting element (20) comprises at least one cutting edge (46), at least sections of which are curved, in particular in the shape of an arc of a circle.

11. The tool (10) as claimed in one of the preceding claims, wherein the tool has a diameter to length ratio of at least 1:8, preferably at least 1:10, furthermore preferably of at least 1:12.

12. The tool (10) as claimed in one of the preceding claims, wherein the groove (30) is configured in the form of a V groove and comprises an opening angle (58) which is a maximum of 100°, preferably approximately 90°, further preferably a maximum of 90°, and wherein a cut-in (50) is preferably provided in the groove base.

13. The tool (10) as claimed in one of the preceding claims, wherein the at least one recess (42) in the back surface (26) is configured in the form of a countersunk bore, is oriented perpendicularly to the longitudinal axis (14) and intersects the longitudinal axis (14).

14. The tool (10) as claimed in one of the preceding claims, wherein the at least one fastening element (24) comprises a head (40) with a drive, which has a recessed form-fitting element for rotational entrainment, preferably a hexagon socket or a hexalobular socket.

15. The tool (10) as claimed in one of the preceding claims, wherein the at least one threaded insert (22) is accommodated in the support plate (18) by means of a material bond or a frictional connection, and is preferably soldered or pressed therein.

## Revendications

1. Outil pour l'usinage d'une pièce par enlèvement de copeaux, en particulier outil de fraisage, avec un arbre (12) qui peut être entraîné en rotation autour d'un axe longitudinal (14) et qui peut être fixé à un logement d'outil, avec un logement (16), une plaque de support (18) qui présente un tranchant (20) avec au moins une arête de coupe (46), et avec au moins un élément de fixation (24) pourvu d'un filetage (32), la plaque de support (18) étant pourvue d'au moins un filetage intérieur (70) et pouvant être fixée au logement (16) au moyen d'au moins un élément de fixation (24) de telle sorte que le tranchant (20) soit orienté de manière centrée, c'est-à-dire par rapport à l'axe longitudinal (14),
**caractérisé en ce que** la plaque de support (18) est constituée de métal dur et le tranchant (20) est constitué de nitrure de bore cristallin cubique (CBN) ou d'un matériau en diamant, et **en ce que** le tranchant (20) est fixé par liaison de matière à la plaque de support (18).

2. Outil (10) selon la revendication 1, dans lequel l'arbre (12) présente un diamètre (56) de 12 mm au maximum, de préférence de 10 mm au maximum, plus préférablement de 7 mm au maximum.

3. Outil (10) selon la revendication 1 ou 2, dans lequel le cercle de coupe présente un diamètre de 15 mm au maximum, de préférence de 13 mm au maximum, plus préférablement de 10 mm au maximum.

4. Outil (10) selon l'une quelconque des revendications précédentes, dans lequel le logement (16) est pourvu d'une surface arrière (26) et d'une rainure (30), la rainure (30) présentant un rétrécissement dans la direction d'un fond de rainure, la surface arrière (26) étant traversée par au moins un évidement (42), et la surface arrière (26) et au moins une surface latérale (28) de la rainure (30) formant un angle intérieur qui correspond à un angle extérieur de la plaque de support (18) et qui vaut de préférence 90°.

5. Outil (10) selon l'une quelconque des revendications précédentes, dans lequel la plaque de support (18) présente au moins un insert fileté (22) qui est pourvu du filetage intérieur (70) et qui est orienté perpendiculairement à l'axe longitudinal (14).

6. Outil (10) selon l'une quelconque des revendications précédentes, dans lequel l'au moins un élément de fixation (24) présente une tête (40) avec un entraînement et peut être acheminé depuis un côté opposé à la surface arrière (26) du logement (16), la tête (40) pouvant être renfoncée dans l'au moins un évidement (42), et l'au moins un élément de fixation (24) et l'au moins un évidement (42) présentant de préférence un cône (38, 44).

7. Outil (10) selon l'une quelconque des revendications précédentes, dans lequel la plaque de support (18) peut être fixée par rapport à l'axe longitudinal (14) de telle sorte que l'au moins une arête de coupe (46) s'étende au moins en partie dans un plan de consigne qui coupe l'axe longitudinal (14) et qui s'étend de préférence parallèlement à la surface arrière (26).

8. Outil (10) selon l'une quelconque des revendications précédentes, dans lequel l'arête de coupe (46) présente au moins un point de référence (48) qui, lors de son mouvement circulaire, décrit un cercle de coupe de consigne de l'outil (10).

9. Outil (10) selon l'une quelconque des revendications précédentes, dans lequel le tranchant (20) présente au moins une arête de coupe (46) au moins partiellement droite qui s'étend parallèlement à l'axe longitudinal (14).

10. Outil (10) selon l'une quelconque des revendications précédentes, dans lequel le tranchant (20) présente au moins une arête de coupe (46) au moins partiellement cintrée, en particulier en forme d'arc de cercle.

11. Outil (10) selon l'une quelconque des revendications précédentes, l'outil présentant un rapport diamètre-longueur d'au moins 1:8, de préférence d'au moins 1:10, plus préférablement d'au moins 1:12.

12. Outil (10) selon l'une quelconque des revendications précédentes, dans lequel la rainure (30) est réalisée sous forme de rainure en V et présente un angle d'ouverture (58) qui vaut aux 100° au maximum, de préférence approximativement 90°, plus préférablement 90° au maximum, et dans lequel une entaille (50) est de préférence prévue dans le fond de rainure.

13. Outil (10) selon l'une quelconque des revendications précédentes, dans lequel l'au moins un évidement (42) dans la surface arrière (26) est réalisé sous forme de contre-alésage, est orienté perpendiculairement à l'axe longitudinal (14) et coupe l'axe longitudinal (14).

14. Outil (10) selon l'une quelconque des revendications précédentes, dans lequel l'au moins un élément de fixation (24) présente une tête (40) avec un entraînement qui présente un élément d'engagement par correspondance de formes renfoncé pour l'entraînement en rotation, de préférence un profilé à six pans creux ou à six lobes internes.

15. Outil (10) selon l'une quelconque des revendications précédentes, dans lequel l'au moins un insert fileté (22) est reçu par engagement par liaison de matière ou par force dans la plaque de support (18), de préférence est brasé ou pressé.
